# FASCICULE DE BREVET EUROPEEN

(11) **EP 3 703 825 B1**
(45) Date de publication et mention de la délivrance du brevet: **21.01.2026**
(21) Numéro de dépôt: 18765486.8
(22) Date de dépôt: 09.08.2018
(51) Int. Cl.: A62B 7/14, G05D 16/06, G05D 16/20

(54) **DISPOSITIF DE RÉGULATION, APPAREIL ET PROCÉDÉ DE GÉNÉRATION DE GAZ RESPIRABLE**
REGULIERUNGSVORRICHTUNG, EINRICHTUNG UND VERFAHREN ZUR ERZEUGUNG VON ATEMGAS
REGULATING DEVICE, APPARATUS AND METHOD FOR GENERATING BREATHING GAS

(30) Priorité: 30.10.2017 FR 1760210
(43) Date de publication de la demande: 09.09.2020
(73) Titulaire: SAFRAN AEROSYSTEMS, 78370 Plaisir (FR)
(72) Inventeur: CAILLAUD, Aurélie, 38500 Voiron (FR); CAZENAVE, Jean-Michel, 38180 Seyssins (FR); DOMENGET, Alexandre, 38360 Sassenage (FR); PENTAGORA, Alexandre, 38170 Seyssinet-Pariset (FR)
(74) Mandataire: Germain Maureau
(86) Numéro de dépôt international: PCT/FR2018/052042
(87) Numéro de publication internationale: WO 2019/086773

(56) Documents cités:
- FR-A1- 2 353 094
- US-A- 3 190 287
- US-A1- 2013 220 317
- MITRA S ET AL: "A DESIGN DIVERSITY METRIC AND RELIABILITY ANALYSIS FOR REDUNDANT SYSTEMS", PROCEEDINGS INTERNATIONAL TEST CONFERENCE 1999. ITC'99. ATLANTIC CITY, NJ, SEPT. 28 - 30, 1999; [INTERNATIONAL TEST CONFERENCE], NEW YORK, NY : IEEE, US, vol. CONF. 30, 1 September 1999 (1999-09-01), pages 662 - 671, XP000928877, ISBN: 978-0-7803-5754-9

## Description

L'invention concerne un dispositif de régulation, un appareil et un procédé de génération de gaz respirable.

L'invention concerne plus particulièrement un dispositif de régulation de gaz respirable délivré à un utilisateur, notamment pour un appareil de génération d'oxygène respirable embarqué dans un aéronef, comportant un circuit de gaz comprenant une ligne principale ayant au moins une extrémité amont destinée à être reliée à au moins une source de gaz et une extrémité aval destinée à être reliée à au moins un poste utilisateur tel qu'un masque, la ligne principale comprenant au moins une vanne de régulation électromécanique configurée pour réguler la pression du gaz entre l'amont et l'aval, le circuit comprenant une ligne secondaire comprenant une extrémité amont destinée à être reliée à au moins une source de gaz et une extrémité aval destinée à être reliée au même(s) poste(s) utilisateur(s), la ligne secondaire comprenant au moins un organe auxiliaire de régulation du flux de gaz, le dispositif comprenant un système de commutation configuré pour commander le transit de gaz entre l'amont et l'aval du circuit via la ligne principale ou via la ligne secondaire.

De tels dispositifs de régulation de gaz respirable délivré à un utilisateur dans un aéronef sont connus des documents US2013220317A1, FR2353094A1 et US3190287A.

L'invention concerne en particulier un dispositif de régulation de gaz respirable pour système de génération d'oxygène embarqué (OBOGS).

Dans l'aviation militaire notamment, certains systèmes d'alimentation des utilisateurs (pilotes) en oxygène comprennent un régulateur de pression principal alimentant un ou des masques à la bonne pression partielle d'oxygène grâce à une source de gaz enrichi en oxygène provenant d'un concentrateur en oxygène (concentrateur de type à tamis moléculaire par exemple).

Ce régulateur dispose classiquement d'un système de secours en débit continu qui court-circuite (bypass) le régulateur principal. Le régulateur principal peut être constitué de deux vannes électromécaniques disposées en série, dont chacune est capable de couper le débit de l'autre en cas de défaillance et d'assurer la fonction de régulation. Par défaillance on désigne notamment : une pression d'oxygène délivrée à l'utilisateur trop faible ou trop importante par rapport à une consigne, une déconnexion de l'utilisateur du concentrateur en cas d'éjection de l'avion, un mauvais fonctionnement du régulateur principal, une panne électrique, un blocage mécanique de la vanne, ....

Le régulateur délivre l'oxygène dans le masque à une pression régulée comprise entre zéro et une centaine de millibars par rapport à la pression atmosphérique selon la consigne (selon l'altitude et l'accélération maximale d'utilisation par exemple).

Ce dispositif présente les fonctions de dilution ou de surpression pour répondre à la fois à l'ensemble des exigences réglementaires et maîtriser la consommation d'oxygène.

Le système de secours de ce régulateur est assuré par un orifice calibré, intégré dans un clapet piloté, alimenté par une bouteille de secours remplie en oxygène pur. Ce système de secours peut généralement s'éjecter de l'avion avec le pilote.

Les dernières générations de régulateurs sont alimentées soit par un concentrateur d'oxygène embarqué, soit par une source gazeuse d'oxygène pur.

Ce système de secours connu alimente le masque du pilote avec un débit d'oxygène continu. Ceci assure la sécurité du vol, en cas de défaillance du régulateur principal, en permettant au pilote de redescendre à une altitude de vol suffisamment basse pour ne pas avoir besoin d'oxygène, mais ne permet pas forcément de prolonger la mission de vol.

Un autre problème de ce système connu est le risque de créer soit une surpression (excédent de débit en phase expiratoire), soit une dépression (insuffisance de débit en phase inspiratoire demandant un complément par de l'air additionnel) au niveau du masque, potentiellement désagréables pour le pilote.

Un but de la présente invention, telle que définie dans le jeu de revendications, est de pallier tout ou partie des inconvénients de l'art antérieur relevés ci-dessus.

A cette fin, le dispositif selon l'invention, par ailleurs conforme à la définition générique qu'en donne le préambule ci-dessus, est essentiellement caractérisé en ce que l'organe auxiliaire de régulation de la ligne secondaire est un régulateur de pression pneumatique.

Ainsi, le système de secours du régulateur principal à bypass volumétrique peut être remplacé par un système de secours de type à pression régulée (régulateur pneumatique en particulier) afin d'assurer, même en cas de bascule sur le système de secours, un confort maximal pour prolonger la mission.

Par ailleurs, des modes de réalisation de l'invention peuvent comporter l'une ou plusieurs des caractéristiques suivantes :
- le dispositif comporte un capteur d'altitude, le régulateur de pression de la ligne auxiliaire étant un régulateur piloté pour réguler la pression de gaz en fonction de l'altitude mesurée par le capteur,
- le dispositif comporte une vanne d'inhibition disposée sur la ligne secondaire en série avec le régulateur de pression pneumatique,
- la vanne d'inhibition est à commande manuelle et/ou pilotée de façon automatique,
- la ligne principale comprend, disposées en série d'amont en aval, une première vanne de commutation et une vanne de régulation électromécanique pilotée pour réguler la pression du gaz,
- la première vanne de commutation comprend deux entrées destinées à être reliées respectivement à deux sources de gaz distinctes, au moins une sortie reliée à la vanne de régulation électromécanique de la ligne principale et un répartiteur pour établir un passage de gaz entre l'une des entrées et ladite sortie ou pour isoler tout passage entre les entrées et ladite sortie,
- la première vanne de commutation comprend deux sorties reliées respectivement à la vanne de régulation électromécanique de la ligne principale et au régulateur de pression pneumatique, le répartiteur étant configuré pour établir un passage de gaz entre au moins l'une des entrées et la sortie reliée au régulateur de pression de la ligne secondaire,
- le dispositif comporte un organe de commande de la position du répartiteur actionnable manuellement permettant de forcer la configuration du répartiteur pour un passage de gaz entre au moins l'une des entrées et la sortie reliée au régulateur de pression de la ligne (8) secondaire,
- la première vanne de commutation est une vanne à tiroir,
- la vanne de régulation électromécanique est une vanne à tiroir pilotée par une électronique de commande recevant des signaux d'un capteur de pression dans le circuit en aval de ladite vanne de régulation,
- le dispositif comprend deux sources distinctes de gaz enrichi en oxygène dont une première des sources est au moins reliée à l'extrémité amont de la ligne principale et dont la seconde source est reliée au moins à l'extrémité amont de la ligne secondaire,
- la seconde source est reliée également à l'extrémité amont de la ligne principale,
- le dispositif comprend au moins un masque de respiration relié à l'extrémité aval de la ligne principale et à l'extrémité aval de la ligne secondaire,
- les extrémités aval de la ligne principale et de la ligne secondaire sont confondues,
- la première source comprend un concentrateur d'oxygène,
- la seconde source comprend au moins un réservoir d'oxygène sous pression.

L'invention concerne également un appareil de génération d'oxygène respirable destiné embarqué dans un aéronef comprenant un dispositif de régulation de gaz conforme à l'une quelconque des caractéristiques ci-dessus ou ci-dessous.

L'invention concerne également un procédé de génération d'oxygène respirable dans un aéronef utilisant un tel appareil de génération d'oxygène, le procédé comprenant un transfert de gaz via la ligne principale entre la source de gaz et un poste utilisateur à une pression régulée entre 0 et 100mbar par rapport à la pression ambiante et, en cas de défaillance du transfert de gaz via la ligne principale, un transfert de gaz via la ligne secondaire principale entre la source de gaz et le poste utilisateur à une pression régulée fixe ou variable par le régulateur de pression de la ligne secondaire.

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- la figure 1 représente une vue schématique et partielle illustrant la structure et le fonctionnement d'un premier exemple de réalisation de dispositif de régulation dans un appareil de génération d'oxygène,
- la figure 2 représente une vue schématique et partielle illustrant la structure et le fonctionnement d'un deuxième exemple de réalisation de dispositif de régulation dans un appareil de génération d'oxygène,
- la figure 3 représente une vue schématique et partielle illustrant la structure et le fonctionnement d'un troisième exemple de réalisation de dispositif de régulation dans un appareil de génération d'oxygène,
- la figure 4 représente une vue schématique et partielle illustrant la structure et le fonctionnement d'un quatrième exemple de réalisation de dispositif de régulation dans un appareil de génération d'oxygène.

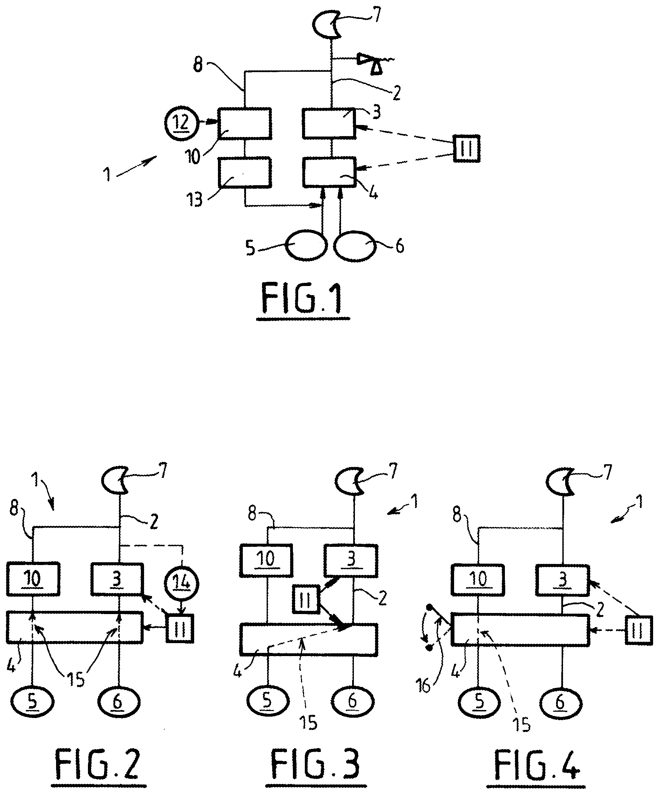

Le dispositif de régulation de gaz respirable représenté à la figure 1 est intégré dans un appareil 1 de génération d'oxygène respirable destiné par exemple à être embarqué dans un aéronef (OBOGS par exemple).

Le dispositif de régulation comporte un circuit de gaz comprenant une ligne 2 principale ayant une extrémité amont reliée, via une vanne 4 de commutation, à deux source 6, 5 de gaz distinctes. Par exemple les deux sources 6, 5 peuvent être respectivement : un concentrateur 6 d'oxygène produisant un gaz enrichi en oxygène (par tamis moléculaire et/ou membranes ou tout autre système approprié) et une source 5 d'oxygène pur ou concentré (bouteille(s) d'oxygène par exemple).

La ligne principale 2 comprend une extrémité aval reliée à au moins un poste utilisateur tel qu'un masque 7, par exemple pour un pilote.

Entre la vanne 4 de commutation et l'extrémité aval, la ligne principale 2 comprend une vanne 3 de régulation électromécanique configurée pour réguler la pression du gaz entre l'amont et l'aval.

La vanne de régulation 3 électromécanique (et/ou la vanne 4 de commutation) peut être pilotée par un organe 11 électronique comprenant un microprocesseur. En particulier, la vanne de régulation 3 électromécanique peut être pilotée pour délivrer au masque une pression d'oxygène régulée (comprise par exemple entre zéro et 100mbar en plus de la pression atmosphérique) qui dépend des conditions de vol (altitude, et accélération d'utilisation). A cet effet, la vanne de régulation 3 électromécanique et/ou son organe 11 de pilotage peut recevoir un ensemble de signaux de capteurs appropriés (altitude, accélération, pression délivrée en aval de la vanne 3...).

Sans que ceci soit limitatif, la vanne de régulation 3 électromécanique peut comprendre tout ou partie des caractéristiques de celle décrite dans le document EP500407A1. En particulier, et comme illustré à la figure 2, la vanne 3 de régulation électromécanique peut être une vanne à tiroir pilotée par une électronique 11 de commande recevant des signaux d'un capteur 14 de pression dans le circuit en aval de ladite vanne 3 de régulation

De même, sans que ceci soit limitatif, la vanne 4 de commutation peut comprendre tout ou partie des caractéristiques de celle décrite dans le document EP499505A1. En particulier la première vanne 4 de commutation peut être une vanne dite « à tiroir » c'est-à-dire comprenant une ou plusieurs entrées et une ou plusieurs sorties et un répartiteur 15 mobile en translation et/ou en rotation commandé qui, selon la position assure la communication fluidique entre une ou des entrées avec une ou des sorties.

Classiquement, le circuit possède une ligne secondaire 8 (ou ligne de secours) comprenant une extrémité amont reliée à au moins l'une 5 des sources de gaz (bouteille(s)) et une extrémité aval reliée au même(s) poste(s) utilisateur(s) 7. Comme illustré, les extrémités aval de la ligne 2 principale et de la ligne 8 secondaire peuvent être confondues. C'est à dire que la ligne 8 secondaire constitue un by-pass de la ligne 2 principale en cas de besoin et notamment en cas de dysfonctionnement de la ligne 2 principale.

Par exemple, l'oxygène est délivré au masque 7 via la ligne 8 secondaire en cas de défaillance de la régulation de la ligne 2 principale (pression partielle trop élevée ou trop faible ou en cas d'éjection du pilote et déconnexion du concentrateur 6 qui reste attaché à l'avion, panne électrique...). Cette commutation peut être commandée par la vanne 4 de commutation.

Cette ligne secondaire 8 comprend un organe 10 auxiliaire de régulation de pression du gaz de préférence de type pneumatique. Par exemple un régulateur 10 pneumatique de pression.

Le régulateur 10 de pression pneumatique est de préférence passif, c'est-à-dire à fonctionnement mécanique (ne nécessitant pas d'alimentation électrique). Par exemple, ce régulateur de pression mécanique comprend une régulation de pression au moyen d'un mécanisme à diaphragme, à clapet(s),.... Par exemple ce régulateur de pression peut comprendre une vanne ou un détendeur de type détendeur à piston et/ou détendeur à membrane, ....

Ce régulateur 10 auxiliaire pneumatique assure alors la fonction de secours du régulateur 3 principal électromécanique. Le régulateur auxiliaire 10 peut être alimenté en gaz par une bouteille 5 d'oxygène pur (bouteille de secours) et/ou par le concentrateur 6. Il délivre alors le gaz au masque 7 du pilote à la demande.

Le régulateur 10 auxiliaire peut être éventuellement asservi (piloté) à partir d'une détection de surpression ou de dépression reflétant la respiration du pilote. Cette mesure de pression pourrait être réalisée par exemple via le dispositif de compensation décrit dans le document EP500407A1.

Ainsi, le régulateur 10 auxiliaire (pneumatique de préférence) peut réguler la pression (et éventuellement le débit) d'oxygène envoyé dans le masque 7.

Comme illustré schématiquement à la figure 1, l'appareil 1 peut éventuellement intégrer une capsule 12 altimétrique dans le régulateur auxiliaire 10 permettant d'ajouter régulation mécanique de la pression (et/ou du débit) en fonction de l'altitude mesurée et/ou en fonction de la demande de l'utilisateur du masque 7.

C'est-à-dire que soit le régulateur 10 auxiliaire assure :
- soit une régulation de pression à une consigne fixe (sans capsule altimétrique ou équivalent),
- soit une régulation de pression variable en fonction de l'altitude et/ou de la demande/accélération (avec capsule 12 altimétrique ou équivalent).

De préférence, et comme illustré à la figure 1, dans le cas où le régulateur 10 auxiliaire assure une régulation de pression en fonction de l'altitude et de la demande (accélération ou autre). Le dispositif comprend de préférence également une vanne d'inhibition 13 permettant d'éviter de vider la bouteille d'oxygène 5 de secours lors de démarrages intempestifs du régulateur 11 auxiliaire. Cette vanne 13 d'inhibition peut être une vanne à commande manuelle et/ou automatique, avec une préférence pour un déclenchement manuel.

Ainsi, en situation normale la vanne 4 de commutation commande l'alimentation en oxygène du masque 7 à partir du concentrateur 6 d'oxygène et via le régulateur 3 de pression électromécanique de la ligne 2 principale. En cas de dysfonctionnement, la vanne 4 de commutation peut commuter l'alimentation en oxygène du masque 7 à partir de la bouteille 5 d'oxygène et via le régulateur 3 de pression électromécanique de la ligne 2 principale.

En cas de dysfonctionnement de la ligne 2 principale, le dispositif peut commuter automatiquement l'alimentation d'oxygène du masque à partir de la bouteille 5 d'oxygène et via le régulateur 10 de pression auxiliaire de la ligne 8 secondaire.

Comme illustré à la figure 2, pour faciliter la commutation entre le mode "normal" et le mode "secours", la vanne 4 de commutation peut être modifiée de sorte à piloter également la sélection entre la vanne de régulation 3 électromécanique (ligne 2 principale) ou le régulateur 10 de pression auxiliaire (ligne 8 secondaire).

C'est-à-dire que la vanne 4 de commutation assure la commutation entre la ligne 2 principale et la ligne 8 secondaire en plus des autres fonctions (commutation entre les deux sources 6, 5 d'oxygène pour alimenter la ligne 2 principale...).

Ainsi, la vanne 4 de commutation peut comprendre deux entrées destinées reliées respectivement aux deux source de gaz (concentrateur d'oxygène 6 et bouteille(s) 5) et deux sorties reliées respectivement à la vanne 3 de régulation électromécanique de la ligne 2 principale et au régulateur de pression 10 auxiliaire.

La vanne 4 de commutation peut comporter un répartiteur 15 mobile (translation et/ou rotation ou autre) configuré pour établir ou non un passage de gaz entre au moins l'une des entrées et la ou les sorties ou pour isoler tout passage entre les entrées et au moins une sortie.

Ainsi, comme illustré à la figure 2, le répartiteur 15 peut commander l'alimentation en oxygène du masque 7 par le concentrateur 6 via la ligne principale (flèche en pointillées de droite). Alternativement le répartiteur 15 peut commander l'alimentation en oxygène du masque 7 par la bouteille 5 via la ligne 8 auxiliaire (flèche en pointillées de gauche).

De plus, de préférence, la vanne 4 de commutation possède une position de verrouillage de l'alimentation en oxygène du masque 7 par le concentrateur 6 via la ligne 2 principale (flèche en pointillées de droite). Cette position verrouillée peut être obtenue grâce à un organe de butée coopérant avec le répartiteur 15 (came ou autre). Cette position verrouillée pourra être prévue par exemple lorsque l'aéronef intégrant ce dispositif est au sol, pour empêcher l'utilisation de la bouteille 5 pour alimenter le masque 7.

Cette position verrouillée peut être déverrouillée (automatiquement ou manuellement) lorsque l'aéronef est en vol. C'est-à-dire que la position de verrouillage de l'alimentation en oxygène du masque 7 par le concentrateur 6 via la ligne principale (flèche en pointillées de droite) est maintenue mais peut être changée.

Par exemple, la vanne 4 de commutation peut commuter l'alimentation d'oxygène du masque via la ligne 2 principale à partir de la bouteille 5 (cf. figure 2 : flèche en pointillés illustrant l'autre état du répartiteur 15). C'est-à-dire que, dans une autre configuration possible, la bouteille 5 d'oxygène de secours peut aussi alimenter la ligne 2 principale.

De même, la vanne 4 de commutation peut commuter l'alimentation d'oxygène du masque 7 via la ligne 8 auxiliaire à partir de la bouteille 5 (cf. figure 2, flèche en pointillés de gauche qui illustre un autre état du répartiteur 15).

Cette configuration pourra être établie par exemple en cas de panne électrique (éjection du pilote par exemple) et/ou en cas de panne de la vanne 3 de régulation électromécanique de la ligne principale 2.

Dans une variante possible, la vanne 4 de commutation peut être configurée (course et/ou géométrie du répartiteur 15 par exemple) pour ne permettre à la bouteille 5 de secours d'alimenter en oxygène que la ligne 8 auxiliaire (et donc pas la ligne 2 principale).

De plus, comme illustré à la figure 3, il est possible d'intégrer à la vanne 4 de commutation une position de secours manuel qui permette d'actionner cette vanne 4 en cas de blocage pour revenir à une position d'alimentation de la ligne 8 auxiliaire par la bouteille 5. A cet effet, le dispositif peut comporter un organe 16 de commande de la position du répartiteur 15 actionnable manuellement par l'utilisateur permettant de forcer la configuration du répartiteur 15 pour un passage de gaz.

L'invention peut présenter de nombreux avantages. En particulier, un telle architecture permet de supprimer l'inconfort potentiel du pilote lié au système de secours selon l'art antérieur. Selon l'invention, en cas de commutation vers le système d'alimentation en oxygène de secours, le régulateur de pression 10 permet d'assurer la fourniture d'oxygène régulé en pression. Le débit sera fourni à la demande du pilote. En effet, dans le cas où le pilote augmente ses inspirations, pour maintenir la consigne de pression régulée (pour compenser la dépression générée par le pilote), le régulateur 10 de pression auxiliaire va augmenter le débit de gaz fourni au masque 7 (et inversement en cas de demande moindre au niveau du masque 7). Cette régulation en pression permet un meilleur confort pour l'utilisateur sans augmenter la consommation électrique du système.

L'invention peut le cas échéant permettre de supprimer ou de diminuer un boîtier de pile(s) car dans le cas où le régulateur 10 de pression auxiliaire est du type pneumatique, celui-ci ne nécessite pas d'alimentation électrique.

Le boitier de pile(s) est généralement une source d'énergie alternative au réseau électrique de l'aéronef qui permet de maintenir toutes ou partie des fonctions du régulateur 3 en cas de perte électrique totale ou partielle (en amplitude ou en temps (microcoupure)) du réseau de bord.

Un boitier pile(s) permet par exemple de faire respirer le pilote comme s'il était branché à l'aéronef. Il permet notamment de maintenir la fonction de "surpression altimétrique" dans le masque 7 en altitude.

Dans la solution proposée, le régulateur 10 de pression mécanique peut être équipé d'une capsule 12 altimétrique mécanique permettant d'ajuster la pression (et/ou le débit) délivrée au masque 7 en fonction de la pression ambiante subie par la capsule 12, ne nécessitant pas d'alimentation électrique.

De plus il est possible d'ajouter d'autres fonctions sur la vanne 4 de commutation pour pouvoir sélectionner également les modes secours et orienter le débit d'oxygène (bouteille 5 et/ou concentrateur 6) vers le régulateur de pression 10 auxiliaire.

De plus, les différentes vannes 4, 3 peuvent être configurées pour compenser les pertes de charge du circuit entre les capteurs de pression et le poste utilisateur (masque 7) cf. par exemple document EP500407A1.

L'utilisation d'une vanne conforme aux exemples donnés ci-dessus peut permettre une régulation de pression très large dans un encombrement relativement réduit. De plus les exemples de vannes (tiroir notamment) permettent de cumuler les caractéristiques d'une vanne monostable et d'une vanne bistable en un seul organe, avec une possibilité de régulation de pression cf. également FR2876432A1.

## Revendications

1. . Dispositif de régulation de gaz respirable délivré à un utilisateur, notamment pour un appareil de génération d'oxygène respirable embarqué dans un aéronef, comportant un circuit de gaz comprenant une ligne (2) principale ayant au moins une extrémité amont destinée à être reliée à au moins une source (6, 5) de gaz et une extrémité aval destinée à être reliée à au moins un poste utilisateur (7) tel qu'un masque (7), la ligne principale (2) comprenant au moins une vanne (3) de régulation électromécanique configurée pour réguler la pression du gaz entre l'amont et l'aval, le circuit comprenant une ligne secondaire (8) comprenant une extrémité amont destinée à être reliée à au moins une source (6, 5) de gaz et une extrémité aval destinée à être reliée au même(s) poste(s) utilisateur(s) (7), la ligne secondaire (8) comprenant au moins un organe (10) auxiliaire de régulation du flux de gaz, le dispositif comprenant un système (11, 4) de commutation configuré pour commander le transit de gaz entre l'amont et l'aval du circuit via la ligne principale (2) ou via la ligne secondaire (8), dans lequel l'organe (10) auxiliaire de régulation de la ligne secondaire (8) est un régulateur de pression pneumatique pour réguler la pression d'oxygène envoyé dans le masque, le dispositif comprenant deux sources distinctes (5, 6) de gaz enrichi en oxygène, la première source (6) comprenant un concentrateur d'oxygène, la seconde source (5) comprenant au moins un réservoir d'oxygène sous pression,
dans lequel, en situation normale une vanne (4) de commutation est configurée pour commander l'alimentation en oxygène du poste utilisateur (7) à partir du concentrateur (6) d'oxygène et via le régulateur (3) de pression électromécanique de la ligne principale (2),
dans lequel, en cas de dysfonctionnement, la vanne (4) de commutation est configurée pour commuter l'alimentation en oxygène du poste utilisateur (7) à partir de la seconde source (5) et via le régulateur (3) de pression électromécanique de la ligne principale (2),
dans lequel, en cas de dysfonctionnement de la ligne principale (2), le dispositif est configuré pour commuter automatiquement l'alimentation d'oxygène du poste utilisateur (7) à partir de la seconde source (5) et via le régulateur (10) de pression auxiliaire de la ligne secondaire (8).

2. . Dispositif selon la revendication 1, **caractérisé en ce qu'**il comporte un capteur (12) d'altitude et **en ce que** le régulateur de pression de la ligne (8) auxiliaire est un régulateur piloté pour réguler la pression de gaz en fonction de l'altitude mesurée par le capteur (12).

3. . Dispositif selon la revendication 1 ou 2, **caractérisé en ce qu'**il comporte une vanne (13) d'inhibition disposée sur la ligne (8) secondaire en série avec le régulateur de pression (10) pneumatique.

4. . Dispositif selon la revendication 3, **caractérisé en ce que** la vanne (13) d'inhibition est à commande manuelle et/ou pilotée de façon automatique.

5. . Dispositif selon l'une quelconque des revendications 1 à 4, **caractérisé en ce que** la ligne principale (2) comprend, disposées en série d'amont en aval, la vanne (4) de commutation et une vanne (3) de régulation électromécanique pilotée pour réguler la pression du gaz.

6. . Dispositif selon la revendication 5, **caractérisé en ce que** la vanne (4) de commutation comprend deux entrées destinées à être reliées respectivement à deux sources (6, 5) de gaz distinctes, au moins une sortie reliée à la vanne (3) de régulation électromécanique de la ligne (2) principale et un répartiteur (15) pour établir un passage de gaz entre l'une des entrées et ladite sortie ou pour isoler tout passage entre les entrées et ladite sortie.

7. . Dispositif selon la revendication 6, **caractérisé en ce que** la vanne (4) de commutation comprend deux sorties reliées respectivement à la vanne (3) de régulation électromécanique de la ligne (2) principale et au régulateur de pression (10) pneumatique, le répartiteur (15) étant configuré pour établir un passage de gaz entre au moins l'une des entrées et la sortie reliée au régulateur de pression (10) de la ligne (8) secondaire.

8. . Dispositif selon la revendication 6 ou 7, **caractérisé en ce qu'**il comporte un organe (16) de commande de la position du répartiteur (15) actionnable manuellement permettant de forcer la configuration du répartiteur pour un passage de gaz entre au moins l'une des entrées et la sortie reliée au régulateur de pression (10) de la ligne (8) secondaire.

9. . Dispositif selon l'une quelconque des revendications 5 à 8, **caractérisé en ce que** la vanne (4) de commutation est une vanne à tiroir.

10. . Dispositif selon l'une quelconque des revendications 1 à 9, **caractérisé en ce que** la vanne (3) de régulation électromécanique est une vanne à tiroir pilotée par une électronique (11) de commande recevant des signaux d'un capteur (14) de pression dans le circuit en aval de ladite vanne (3) de régulation.

11. . Dispositif selon l'une quelconque des revendications 1 à 10, **caractérisé en ce qu'**il comprend deux sources distinctes (5, 6) de gaz enrichi en oxygène dont une première (6) des sources est au moins reliée à l'extrémité amont de la ligne (2) principale et dont la seconde source (5) est reliée au moins à l'extrémité amont de la ligne (8) secondaire.

12. . Dispositif selon la revendication 11, **caractérisé en ce que** la seconde source (5) est reliée également à l'extrémité amont de la ligne (2) principale.

13. . Dispositif selon l'une quelconque des revendications précédentes, **caractérisé en ce qu'**il comprend au moins un masque (7) de respiration relié à l'extrémité aval de la ligne (2) principale et à l'extrémité aval de la ligne (8) secondaire.

14. . Appareil de génération d'oxygène respirable destiné embarqué dans un aéronef comprenant un dispositif de régulation de gaz conforme à l'une quelconque des revendications 1 à 13.

15. . Procédé de génération d'oxygène respirable dans un aéronef utilisant un appareil de génération conforme à la revendication précédente, le procédé comprenant un transfert de gaz via la ligne principale entre la source (6, 5) de gaz et un poste utilisateur (7) à une pression régulée entre 0 et 100mbar par rapport à la pression ambiante et, en cas de défaillance du transfert de gaz via la ligne principale (2), un transfert de gaz via la ligne secondaire (8) principale entre la source (5) de gaz et le poste utilisateur (7) à une pression régulée fixe ou variable par le régulateur de pression (10) de la ligne (8) secondaire.

## Patentansprüche

1. Vorrichtung zur Regelung von Atemgas, das an einen Benutzer geliefert wird, insbesondere für ein in einem Luftfahrzeug eingebautes Gerät zur Erzeugung von Atemsauerstoff, die einen Gaskreislauf aufweist, der eine Hauptleitung (2) mit mindestens einem stromaufwärtigen Ende, das mit mindestens einer Gasquelle (6, 5) verbunden sein soll, und ein stromabwärtigen Ende, das mit mindestens einer Benutzerstation (7) wie einer Maske (7) verbunden sein soll, umfasst, wobei die Hauptleitung (2) mindestens ein elektromechanisches Regelventil (3) umfasst, das so konfiguriert ist, dass es den Gasdruck zwischen dem stromaufwärtigen und dem stromabwärtigen Ende reguliert, wobei der Kreislauf eine Sekundärleitung (8) umfasst, die ein stromaufwärtiges Ende, das mit mindestens einer Gasquelle (6, 5) verbunden sein soll, und ein stromabwärtiges Ende, das mit derselben/denselben Benutzerstation(en) (7) verbunden sein soll, umfasst, wobei die Sekundärleitung (8) mindestens ein Hilfsorgan (10) zur Regelung des Gasflusses umfasst, wobei die Vorrichtung ein Schaltsystem (11, 4) umfasst, das so konfiguriert ist, dass es den Gasdurchgang zwischen dem stromaufwärtigen und dem stromabwärtigen Ende des Kreislaufs über die Hauptleitung (2) oder über die Sekundärleitung (8) steuert, wobei das Hilfsorgan (10) zur Regelung der Sekundärleitung (8) ein pneumatischer Druckregler zur Regelung des in die Maske geleiteten Sauerstoffdrucks ist, wobei die Vorrichtung zwei getrennte Quellen (5, 6) von mit Sauerstoff angereichertem Gas umfasst, wobei die erste Quelle (6) einen Sauerstoffkonzentrator umfasst und die zweite Quelle (5) mindestens einen unter Druck stehenden Sauerstoffbehälter umfasst,
wobei unter normalen Bedingungen ein Umschaltventil (4) so konfiguriert ist, dass es die Sauerstoffversorgung der Benutzerstation (7) von dem Sauerstoffkonzentrator (6) und über den elektromechanischen Druckregler (3) der Hauptleitung (2) steuert,
wobei das Umschaltventil (4) in dem Falle einer Störung so konfiguriert ist, dass es die Sauerstoffversorgung der Benutzerstation (7) von der zweiten Quelle (5) und über den elektromechanischen Druckregler (3) der Hauptleitung (2) umschaltet,
wobei die Vorrichtung in dem Falle einer Störung der Hauptleitung (2) so konfiguriert ist, dass sie die Sauerstoffversorgung der Benutzerstation (7) automatisch von der zweiten Quelle (5) und über den Hilfsdruckregler (10) der Sekundärleitung (8) umschaltet.

2. Vorrichtung nach Anspruch 1, **dadurch gekennzeichnet, dass** sie einen Höhensensor (12) aufweist und dass der Druckregler der Hilfsleitung (8) ein gesteuerter Regler zur Regelung des Gasdrucks in Abhängigkeit von der von dem Sensor (12) gemessenen Höhe ist.

3. Vorrichtung nach Anspruch 1 oder 2, **dadurch gekennzeichnet, dass** sie ein Sperrventil (13) aufweist, das in der Sekundärleitung (8) in Reihe mit dem pneumatischen Druckregler (10) angeordnet ist.

4. Vorrichtung nach Anspruch 3, **dadurch gekennzeichnet, dass** das Sperrventil (13) manuell gesteuert und/oder automatisch gesteuert ist.

5. Vorrichtung nach einem der Ansprüche 1 bis 4, **dadurch gekennzeichnet, dass** die Hauptleitung (2) das Umschaltventil (4) und ein gesteuertes elektromechanisches Regelventil (3) zur Regelung des Gasdrucks umfasst, die in Reihe von dem stromaufwärtigen Ende zu dem stromabwärtigen Ende angeordnet sind.

6. Vorrichtung nach Anspruch 5, **dadurch gekennzeichnet, dass** das Umschaltventil (4) zwei Eingänge, die jeweils mit zwei getrennten Gasquellen (6, 5) verbunden sein sollen, mindestens einen Ausgang, der mit dem elektromechanischen Regelventil (3) der Hauptleitung (2) verbunden ist, und einen Verteiler (15) umfasst, um einen Gasdurchgang zwischen einem der Eingänge und dem Ausgang herzustellen oder um jeden Durchgang zwischen den Eingängen und dem Ausgang zu isolieren.

7. Vorrichtung nach Anspruch 6, **dadurch gekennzeichnet, dass** das Umschaltventil (4) zwei Ausgänge umfasst, die jeweils mit dem elektromechanischen Regelventil (3) der Hauptleitung (2) und dem pneumatischen Druckregler (10) verbunden sind, wobei der Verteiler (15) so konfiguriert ist, dass er einen Gasdurchgang zwischen mindestens einem der Eingänge und dem mit dem Druckregler (10) der Sekundärleitung (8) verbundenen Ausgang herstellt.

8. Vorrichtung nach Anspruch 6 oder 7, **dadurch gekennzeichnet, dass** sie ein manuell bedienbares Element (16) zur Steuerung der Position des Verteilers (15) aufweist, mit dem die Konfiguration des Verteilers für einen Gasdurchgang zwischen mindestens einem der Eingänge und dem mit dem Druckregler (10) der Sekundärleitung (8) verbundenen Ausgang erzwungen werden kann.

9. Vorrichtung nach einem der Ansprüche 5 bis 8, **dadurch gekennzeichnet, dass** das Umschaltventil (4) ein Schieberventil ist.

10. Vorrichtung nach einem der Ansprüche 1 bis 9, **dadurch gekennzeichnet, dass** das elektromechanische Regelventil (3) ein Schieberventil ist, das von einer Steuerelektronik (11) gesteuert wird, die Signale von einem Drucksensor (14) in dem Kreislauf nach dem Regelventil (3) empfängt.

11. Vorrichtung nach einem der Ansprüche 1 bis 10, **dadurch gekennzeichnet, dass** sie zwei getrennte Quellen (5, 6) von mit Sauerstoff angereichertem Gas umfasst, von denen eine erste (6) der Quellen mindestens mit dem stromaufwärtigen Ende der Hauptleitung (2) verbunden ist und die zweite Quelle (5) mindestens mit dem stromaufwärtigen Ende der Sekundärleitung (8) verbunden ist.

12. Vorrichtung nach Anspruch 11, **dadurch gekennzeichnet, dass** die zweite Quelle (5) auch mit dem stromaufwärtigen Ende der Hauptleitung (2) verbunden ist.

13. Vorrichtung nach einem der vorhergehenden Ansprüche, **dadurch gekennzeichnet, dass** sie mindestens eine Atemmaske (7) umfasst, die mit dem stromabwärtigen Ende der Hauptleitung (2) und dem stromabwärtigen Ende der Sekundärleitung (8) verbunden ist.

14. Gerät zur Erzeugung von Atemsauerstoff an Bord eines Luftfahrzeugs, umfassend eine Gasregelvorrichtung nach einem der Ansprüche 1 bis 13.

15. Verfahren zur Erzeugung von Atemsauerstoff in einem Luftfahrzeug unter Verwendung eines Erzeugungsgeräts nach dem vorhergehenden Anspruch, wobei das Verfahren einen Gastransfer über die Hauptleitung zwischen der Gasquelle (6, 5) und einer Benutzerstation (7) mit einem geregelten Druck zwischen 0 und 100 mbar gegenüber dem Umgebungsdruck und, bei Ausfall des Gastransfers über die Hauptleitung (2), einen Gastransfer über die Hauptsekundärleitung (8) zwischen der Gasquelle (5) und der Benutzerstation (7) mit einem festen oder variablen Druck, der durch den Druckregler (10) der Sekundärleitung (8) geregelt wird, umfasst.

## Claims

1. A device for regulating breathable gas delivered to a user, in particular for a breathable oxygen generation apparatus on board an aircraft, including a gas circuit comprising a main line (2) having at least one upstream end intended to be connected to at least one gas source (6, 5) and a downstream end intended to be connected to at least one user station (7) such as a mask (7), the main line (2) comprising at least one electromechanical regulating valve (3) configured to regulate the gas pressure between the upstream and downstream, the circuit including a secondary line (8) including an upstream end intended to be connected to at least one gas source (6, 5) and a downstream end intended to be connected to the same user station(s) (7), the secondary line (8) comprising at least one auxiliary gas flow regulating member (10), the device comprising a switching system (11, 4) configured to control the transit of gas between the upstream and downstream of the circuit via the main line (2) or via the secondary line (8), wherein the auxiliary regulating member (10) of the secondary line (8) is a pneumatic pressure regulator for regulating the oxygen pressure sent to the mask, the device comprising two separate oxygen-enriched gas sources (5, 6), the first source (6) comprising an oxygen concentrator, the second source (5) comprising at least one pressurized oxygen reservoir,
wherein, under normal conditions, a switching valve (4) is configured to control the oxygen supply to the user station (7) from the oxygen concentrator (6) and via the electromechanical pressure regulator (3) of the main line (2),
wherein, in the event of a malfunction, the switching valve (4) is configured to switch the oxygen supply to the user station (7) from the second source (5) and via the electromechanical pressure regulator (3) of the main line (2),
wherein, in the event of a malfunction of the main line (2), the device is configured to automatically switch the oxygen supply to the user station (7) from the second source (5) and via the auxiliary pressure regulator (10) of the secondary line (8).

2. The device according to claim 1, **characterized in that** it includes an altitude sensor (12) and **in that** the pressure regulator of the auxiliary line (8) is a regulator piloted to regulate the gas pressure according to the altitude measured by the sensor (12).

3. The device according to claim 1 or 2, **characterized in that** it includes an inhibition valve (13) arranged on the secondary line (8) in series with the pneumatic pressure regulator (10).

4. The device according to claim 3, **characterized in that** the inhibition valve (13) is manually operated and/or automatically piloted.

5. The device according to any one of claims 1 to 4, **characterized in that** the main line (2) comprises, arranged in series from upstream to downstream, the switching valve (4) and an electromechanical regulating valve (3) piloted for regulating the gas pressure.

6. The device according to claim 5, **characterized in that** the switching valve (4) comprises two inlets intended to be connected respectively to two separate gas sources (6, 5), at least one outlet connected to the electromechanical regulating valve (3) of the main line (2), and a distributor (15) for establishing a gas passage between one of the inlets and said outlet or for isolating any passage between the inlets and said outlet.

7. The device according to claim 6, **characterized in that** the switching valve (4) comprises two outlets connected respectively to the electromechanical regulating valve (3) of the main line (2) and the pneumatic pressure regulator (10), the distributor (15) being configured to establish a gas passage between at least one of the inlets and the outlet connected to the pressure regulator (10) of the secondary line (8).

8. The device according to claim 6 or 7, **characterized in that** it includes a manually operable member (16) for controlling the position of the distributor (15) allowing the configuration of the distributor to be forced for a gas passage between at least one of the inlets and the outlet connected to the pressure regulator (10) of the secondary line (8).

9. The device according to any one of claims 5 to 8, **characterized in that** the switching valve (4) is a spool valve.

10. The device according to any one of claims 1 to 9, **characterized in that** the electromechanical regulating valve (3) is a spool valve piloted by an electronic control unit (11) receiving signals from a pressure sensor (14) in the circuit downstream of said regulating valve (3).

11. The device according to any one of claims 1 to 10, **characterized in that** it comprises two separate oxygen-enriched gas sources (5, 6), a first source (6) of which is at least connected to the upstream end of the main line (2) and the second source (5) of which is connected at least to the upstream end of the secondary line (8).

12. The device according to claim 11, **characterized in that** the second source (5) is also connected to the upstream end of the main line (2).

13. The device according to any one of the preceding claims, **characterized in that** it comprises at least one breathing mask (7) connected to the downstream end of the main line (2) and to the downstream end of the secondary line (8).

14. A breathable oxygen generation apparatus for use on board an aircraft comprising a gas regulating device according to any one of claims 1 to 13.

15. A method for generating breathable oxygen in an aircraft using a generation apparatus according to the preceding claim, the method comprising a gas transfer via the main line between the gas source (6, 5) and a user station (7) at a pressure regulated between 0 and 100 mbar relative to ambient pressure and, in the event of a failure of the gas transfer via the main line (2), a gas transfer via the secondary line (8) between the gas source (5) and the user station (7) at a fixed or variable pressure regulated by the pressure regulator (10) of the secondary line (8).
